# FASCICULE DE BREVET EUROPEEN

(11) **EP 2 443 034 B1**
(45) Date de publication et mention de la délivrance du brevet: **09.09.2015**
(21) Numéro de dépôt: 10737979.4
(22) Date de dépôt: 09.06.2010
(51) Int. Cl.: F02C 7/24, F02K 1/82, F16L 59/02, F16L 59/12

(54) **PROCÉDÉ D'ASSEMBLAGE D'UNE PROTECTION THERMIQUE SUR UNE STRUCTURE INTERNE FIXE DE NACELLE DE TURBORÉACTEUR**
VERFAHREN ZUR INSTALLATION EINER WÄRMEABSCHIRMUNG AUF EINER FIXEN INNENSTRUKTUR EINER TRIEBWERKSGONDEL
METHOD FOR INSTALLING HEAT SHIELDING ON A FIXED INTERNAL STRUCTURE OF A JET ENGINE NACELLE

(30) Priorité: 15.06.2009 FR 0902902
(43) Date de publication de la demande: 25.04.2012
(73) Titulaire: Aircelle, 76700 Gonfreville L'Orcher (FR)
(72) Inventeur: LEMAINS, Laurence, F-76700 St Laurent De Brevedent (FR); MER, Pascal, F-76600 Le Havre (FR)
(74) Mandataire: Gaillarde, Frédéric F. Ch.
(86) Numéro de dépôt international: PCT/FR2010/051148
(87) Numéro de publication internationale: WO 2010/146287

(56) Documents cités:
- EP-A2- 0 748 686
- WO-A2-2005/003476
- FR-A1- 2 909 974
- US-A- 4 522 673
- US-A- 4 567 076
- US-A- 5 476 237

## Description

La présente invention se rapporte à un procédé d'assemblage d'une protection thermique sur une structure interne fixe de nacelle de turboréacteur.

Un exemple de l'art antérieur est fourni par le document US 4,522,673 A1.

Un avion est mû par un ou plusieurs turboréacteurs logés chacun dans une nacelle.

Une nacelle présente généralement une structure tubulaire comprenant une entrée d'air en amont du turboréacteur, un ensemble intermédiaire destiné à entourer une soufflante du turboréacteur, un ensemble arrière pouvant intégrer des moyens d'inversion de poussée et destiné à entourer la chambre de combustion et tout ou partie des étages de compresseur et de turbine du turboréacteur, et est généralement terminée par une tuyère d'éjection dont la sortie est située en aval du turboréacteur.

Les nacelles modernes sont destinées à abriter un turboréacteur double flux apte à engendrer, d'une part, un flux d'air chaud (également appelé flux primaire) issu de la chambre de combustion du turboréacteur, et circulant dans un espace délimité par un compartiment de forme sensiblement tubulaire appelé compartiment core, et d'autre part, un flux d'air froid (flux secondaire) issu de la soufflante et circulant à l'extérieur du turboréacteur à travers un passage annulaire, également appelé veine, formé entre une structure interne définissant un carénage du turboréacteur et une paroi interne de la nacelle. Les deux flux d'air sont éjectés du turboréacteur par l'arrière de la nacelle.

Le compartiment core comprend une enveloppe externe appelée structure interne fixe (ou IFS) comprenant au moins un panneau. On distingue principalement deux types de composition de panneau d'IFS avec, d'une part, les IFS métalliques comprenant un panneau de type sandwich en nid d'abeille (NIDA) métallique pris entre deux couches métalliques telles que des peaux en aluminium, éventuellement percées acoustiquement côté veine, et d'autre part, les IFS composites construites sur le même principe que leur équivalent métallique, mais pour lesquels les couches métalliques sont remplacées par des peaux internes (côté compartiment core) et externes (côté veine) en matériaux composites (par exemple : carbone/époxy ou carbone/BMI).

Etant donné que la structure interne fixe est soumise à de fortes contraintes thermiques, il est nécessaire de protéger les panneaux qui composent l'IFS par une protection thermique, afin de maintenir localement les températures à des niveaux acceptables et pour prolonger la durée de vie du matériel. Le rôle des protections thermiques est de protéger les composants de la nacelle de l'environnement moteur, ces composants pouvant être impactés par la convection de l'air en provenance du compartiment core, dont la température peut typiquement atteindre 400 °C, et par le rayonnement du carter moteur, dont la température peut typiquement atteindre 750 °C. L'ensemble formé par l'IFS recouvert par une protection thermique assure également un rôle de barrière anti-feu.

Pour protéger thermiquement l'IFS, il est connu d'avoir recours à des protections thermiques placées côté compartiment core, et comprenant un matelas isolant, généralement constitué de fibres de silice, de céramique ou d'un matériau microporeux, pris entre deux feuillards en inox. La protection thermique est fixée à l'IFS à l'aide de systèmes de fixation qui coopérent ponctuellement avec lui sur toute la surface de la protection, à la manière de rivets. La protection thermique est également retenue par ses bords sur l'IFS par des bandes de retenue appelées communément « retainers ». La pose de protections thermiques sur l'IFS avec ce type de fixation est longue (plusieurs dizaines d'heures), étant donné qu'un nombre important d'opérations répétitives sont nécessaires.

D'autre part, les protections thermiques connues ne sont pas adaptées pour la protection thermique des IFS composites comprenant des peaux en carbone/époxy, étant donné que ces protections thermiques de la technique ne permettent pas de garantir localement un maintien de la température à une valeur inférieure ou égale à 120°C en restant dans des gammes d'épaisseur et/ou de masse acceptables pour l'aéronautique. Cet insuffisance en matière de performance technique rend donc difficile l'utilisation de tels peaux en carbone/époxy, moins coûteuses que leur équivalement en carbone/BMI qui peuvent supporter des températures de l'ordre de 150°C. Ce point est particulièrement important compte tenu de l'essor que connaissent actuellement les matériaux composites dans l'aéronautique.

La présente invention résoud tout ou partie des inconvénients préalablement évoqués.

On atteint le but principal de l'invention, selon un premier aspect, avec un procédé d'assemblage d'une protection thermique, comprenant un matelas thermique recouvert d'un pli constitué d'un matériau structural, sur une structure interne fixe de nacelle de turboréacteur, comprenant les étapes revendiquées dans la revendication 1.

Grâce à un tel procédé il n'est pas nécessaire d'avoir recours à des moyens de fixation pour assurer un maintien en position de la protection thermique sur l'IFS, malgré les hautes températures susceptibles de désolidariser les pièces suite à des dilatations locales. Par conséquent, il suffit d'enduire les faces à mettre en contact pour le collage et de les ajuster l'une sur l'autre, la colle résistant à haute température et la planéité du pli constitué par le matériau structural permettant la tenue de manière sûre de la protection thermique sur l'IFS. La prise de la colle est spontanée après au moins quelques minutes.

Un tel procédé permet d'éviter d'avoir recours à un nombre important de moyens de fixation répartis sur une grande partie de points d'attaches et il évite d'avoir à pauser des retainers qui sont onéreux ; il est donc compatible avec un montage rapide et peu coûteux de la protection thermique sur l'IFS.

Il est bien entendu possible d'envisager de mettre en oeuvre un tel procédé pour assurer une protection thermique sur d'autres éléments de la structure d'un appareil du domaine de l'aéronautique, et en particulier les cadres structuraux (par exemple les cadres d'entrée d'air ou d'inverseur de poussée), les carters moteur (par exemple le carter externe de la veine fan).

Le terme « matériau structural » au sens de la présente invention désigne un matériau ayant une bonne tenue structurale dans une plage de températures située autour de 150 °C, apte à retenir le matelas thermique, c'est-à-dire la couche de matériau isolant.

Suivant d'autres caractéristiques optionnelles du procédé selon l'invention :
- ledit pli est un pli de verre : le verre est particulièrement adapté au collage, il permet une adhésion optimale de la protection thermique sur l'IFS ;
- ledit matelas thermique est collé sur ledit pli de verre ;
- ledit matelas thermique est recouvert d'un matériau étanche aux fluides et pare-feu, tel qu'une tôle en inox : un tel matériau étanche permet un drainage des hydrocarbures en provenance du bloc moteur, lequel est préférable étant donné le surpoids occasionné par toute rétention d'effluents et les dommages qui peuvent être causés sur la structure par de tels hydrocarbures, surtout lorsque celle-ci comprend des matériaux composites ; de même, ce drainage est indispensable pour limiter les risques liés au feu, étant donné que les normes aéronautiques interdisent la rétention de produits inflammables sous forme de poches volumineuses ou bien par des matériaux poreux tel que le matelas thermique ;
- de manière alternative, ledit matelas thermique peut être formé dans un matériau hydrophobe, ce qui permet de s'affranchir de la mise en place d'une couche étanche aux fluides ;
- ledit matelas thermique est un matelas thermique du type Pyrogel 6671 : un tel matelas est particulièrement approprié pour garantir une protection thermique optimale et présente des performances thermiques tout à fait adaptées pour ce type d'application, il permet notamment l'utilisation de peaux d'IFS en carbone/époxy qui sont plus sensibles aux contraintes thermiques que leurs équivalents en carbone/BMI ; par « du type » Pyrogel 6671, on entend tout matelas thermique ayant des propriétés équivalentes à celles de ce matériau ;
- la colle est appliquée par plots : une telle répartition de la colle entre la protection thermique et l'IFS permet d'avoir une lame d'air stagnant à ce niveau et améliore l'isolation thermique ; le terme « plot » dans le cadre de la présente invention désigne une zone restreinte sur la surface de laquelle doit être appliquée la colle. Une telle répartition de la colle de manière discrète permet à des poches d'air de se constituer entre les deux surfaces.

Selon un deuxième aspect, la présente invention concerne une structure interne fixe comportant, sur sa face interne côté compartiment core, un matelas du type Pyrogel 6671 collé conformément au procédé tel que décrit précédemment.

D'autres caractéristiques et avantages de la présente invention apparaîtront à la lumière de la description qui va suivre en référence aux figures annexées, dans lesquels :
- la figure 1 est une vue d'ensemble, en coupe longitudinale, d'une nacelle de turboréacteur de l'état de la technique ;
- la figure 2 représente une vue de détail, en coupe longitudinale, d'un assemblage de l'état de la technique, dans lequel un matelas isolant est assemblé sur l'IFS d'une nacelle par des moyens de fixation connus pour cette application ;
- la figure 3 représente une vue de détail, en coupe longitudinale, d'un assemblage mis en oeuvre avec un procédé selon la présente invention, dans lequel un matelas isolant Pyrogel 6671 est collé sur l'IFS d'une nacelle de turboréacteur ;
- la figure 4 est un tableau établissant une comparaison entre les propriétés thermiques d'un matelas type Pyrogel 6671 et les protections thermiques classiquement utilisées.

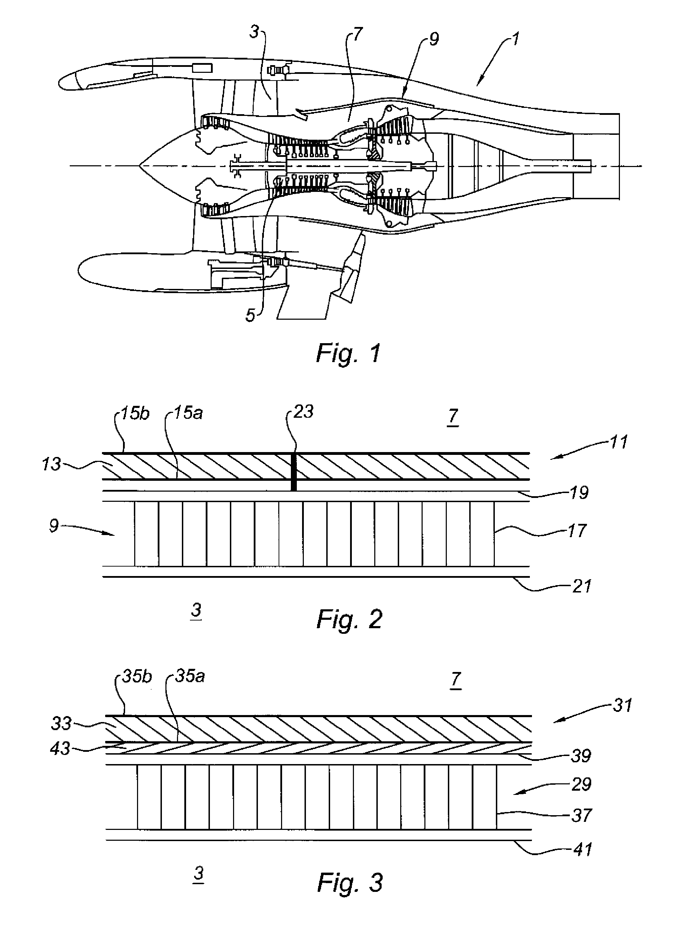

La figure 1 représente une nacelle de turboréacteur 1, vue selon une coupe longitudinale, comprenant une veine 3 dans laquelle circule de l'air froid lorsque le turboréacteur est en fonctionnement, et une chambre de combustion 5 en partie encadrée par un compartiment core 7 délimité sur sa partie externe côté veine 3, par une structure interne fixe (IFS) 9.

La figure 2 représente une protection thermique 11 fixée du côté compartiment core 7 sur l'IFS 9. La protection thermique 11 comprend un matelas thermique 13, tel que ceux utilisés pour les protections thermique de la structure de l'Airbus A380, pris entre deux tôles en inox 15a et 15b. L'IFS 9 comprend un panneau 17 en métal, de type sandwich en nid d'abeille (NIDA), pris entre une peau interne 19 et une peau externe 21, qui peuvent être en métal ou en matériau composite.

La protection thermique 11 est fixée selon une méthode connue de la technique sur la peau interne 19 de l'IFS, à l'aide de moyens de fixation 23. De tels moyens de fixation 23 sont répartis sur un nombre important de points d'attache sur toute la surface de la peau interne 19 de l'IFS côté compartiment core 7. Une lame d'air 24 sépare la peau interne 19 de la protection thermique 11, son épaisseur est généralement de un millimètre. Des moyens de ventilation, non représentés, appelés « vent in » et « vent through » assurent pour ce qui est des « vent in » la ventilation du matériau isolant, et s'agissant des « vent through » une bonne répartition de pression entre la lame d'air et le compartiment core.

La figure 3 représente un IFS 29 sur lequel est montée une protection thermique 31 selon un mode de réalisation du procédé de la présente l'invention. La protection thermique 31 comprend un matelas thermique Pyrogel 6671 33 constitué d'aérogels de silice nappés dans des fibres aiguilletées pris entre d'une part un pli de verre 35a et une tôle en inox 35b. Les matelas Pyrogel 6671 sont fabriqués par la société Aspen Aerogels (30 Forbes Road, Building B, Northborough, MA 01532 - USA). L'IFS 29, tout comme l'IFS 9, comprend un panneau 37 en métal, de type sandwich en nid d'abeille (NIDA), pris entre une peau interne 39 et une peau externe 41, qui peuvent être en métal ou en matériau composite.

Le pli de verre 35a du matelas 33 est collé avec de la colle 43 sur la peau interne 39 de l'IFS. Pour cela, dans un premier temps il est nécessaire d'enduire le pli de verre 35a et/ou la peau interne 39 de l'IFS avec de la colle 43, qui peut être par exemple du type APRONOR haute T°C 1000, ou toute autre colle permettant une tenue en température et une tenue mécanique compatibles avec les contraintes exercées au niveau de l'IFS. La colle APRONOR est fabriquée par la société APRONOR (Zone industrielle Nord, 39 avenue de l'industrie, 76190 Ste Marie des Champs - France).

L'opérateur applique ensuite le pli 35a sur la peau interne 39. Une étape ultérieure peut être nécessaire pour provoquer la prise de la colle, on peut avoir, par exemple, le recours à un étuvage à une température de sensiblement 70°C, comme cela est le cas lorqu'on utilise la colle APRONOR haute T°C 1000. Ceci est utile, étant donné que, dans ce cas, l'opérateur peut ajuster les pièces l'une par rapport à l'autre, en l'espèce le matelas par rapport à l'IFS, sans craindre une prise prématurée de la colle. Les moyens de ventilation type « vent through » ne sont pas nécessaires dans un assemblage d'une protection thermique 31 sur un IFS conformément au mode de réalisation représenté sur la figure 3. Cependant, il peut être envisagé une répartition de la colle de manière discrète, c'est-à-dire par plots ; dans ce cas les « vent through » sont nécessaires.

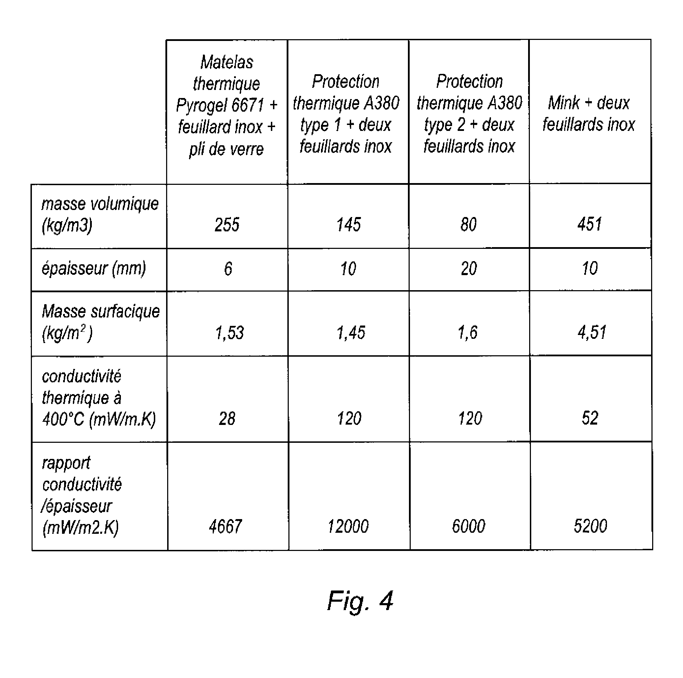

La figure 4 illustre l'intérêt d'utiliser une protection thermique 31 comprenant un matelas du type matelas thermique Pyrogel 6671 33, en comparaison des matelas utilisés classiquement tels que ceux actuellement montés dans les nacelles des appareils Airbus A380. Il ressort du tableau 1 que les matelas Pyrogel 6671 sont plus isolants que les matelas actuellement utilisés. Ils sont donc davantage adaptés pour la protection des IFS avec des peaux en carbone/époxy, qui sont parmi les plus sensibles aux contraintes thermiques. Ainsi, pour avoir les mêmes performances thermiques qu'un matelas thermique Pyrogel 6671, il faut utiliser une épaisseur de matelas bien plus importante dans le cas d'un matelas utilisés classiquement. Utiliser un matelas thermique Pyrogel 6671 est donc particulièrement approprié pour l'aéronautique, surtout lorsque le matelas équipe un environnement confiné.

Bien entendu, la présente invention n'est nullement limitée aux modes de réalisations décrits et représentés, fournis à titre de simples exemples.

## Revendications

1. Procédé d'assemblage d'une protection thermique (31), comprenant un matelas thermique (33) recouvert d'un pli (35a) constitué d'un matériau structural, sur une structure interne fixe (29) de nacelle de turboréacteur, comprenant les étapes successives suivantes :
- enduire d'une colle (43) prévue pour assurer une bonne tenue mécanique jusqu'à une température de 1000°C, ledit pli (35a) et/ou une peau interne (39) de la structure interne fixe ;
- appliquer ledit pli (35a) sur ladite peau interne (39), et
- laisser la colle prendre spontanément après au moins quelques minutes.

2. Procédé selon la revendication 1, dans lequel ledit pli (35a) est un pli de verre.

3. Procédé selon la revendication 2, dans lequel ledit matelas thermique est collé sur ledit pli de verre.

4. Procédé selon l'une des revendications 1 à 3, dans lequel ledit matelas thermique (33) est recouvert d'un matériau étanche aux fluides et pare-feu, tel qu'une tôle (35b) en inox.

5. Procédé selon l'une quelconque des revendications 1 à 3, dans lequel ledit matelas thermique est formé dans un matériau hydrophobe.

6. Procédé selon l'une quelconque des revendications précédentes, dans lequel ledit matelas thermique (33) est un matelas thermique du type Pyrogel 6671.

7. Procédé selon l'une quelconque des revendications précédentes, dans lequel la colle (43) est appliquée par plots.

8. Procédé selon l'une quelconque des revendications précédentes, dans lequel la colle (43) est une colle du type APRONOR haute T°C 1000.

9. Structure interne fixe (29) de nacelle de turboréacteur comportant, sur sa face interne côté compartiment core, un matelas du type Pyrogel 6671 (33) collé conformément au procédé selon l'une quelconque des revendications précédentes.

## Patentansprüche

1. Verfahren zum Zusammenbau eines Wärmeschutzes (31), umfassend eine Wärmedecke (33), bedeckt von einer Schicht (35a), die aus einem Strukturmaterial besteht, auf einer festen inneren Struktur (29) einer Turbostrahltriebwerksgondel, umfassend die folgenden aufeinander folgenden Schritte:
- Beschichten mit einem Klebstoff (43), der ausgelegt ist, um eine gute mechanische Festigkeit bis zu einer Temperatur von 1000 °C sicherzustellen, der Schicht (35a) und/oder einer Innenhaut (39) der festen inneren Struktur,
- Aufbringen der Schicht (35a) auf die Innenhaut (39), und
- spontanes Aushärtenlassen nach mindestens einigen Minuten.

2. Verfahren nach Anspruch 1, wobei die Schicht (35a) eine Glasschicht ist.

3. Verfahren nach Anspruch 2, wobei die Wärmedecke auf die Glasschicht geklebt ist.

4. Verfahren nach einem der Ansprüche 1 bis 3, wobei die Wärmedecke (33) mit einem flüssigkeitsdichten und feuerfesten Material wie z.B. einem Blech (35b) aus nichtrostendem Stahl bedeckt ist.

5. Verfahren nach einem der Ansprüche 1 bis 3, wobei die Wärmedecke aus einem hydrophoben Material gebildet ist.

6. Verfahren nach einem der vorhergehenden Ansprüche, wobei die Wärmedecke (33) eine Wärmedecke vom Typ Pyrogel 6671 ist.

7. Verfahren nach einem der vorhergehenden Ansprüche, wobei der Klebstoff (43) durch Kontakte aufgebracht wird.

8. Verfahren nach einem der vorhergehenden Ansprüche, wobei der Klebstoff (43) ein Klebstoff vom Typ APRONOR haute T°C 1000 ist.

9. Feste innere Struktur (29) einer Turbostrahltriebwerksgondel, umfassend, auf ihrer inneren Seite, kernraumseitig, eine Decke vom Typ Pyrogel 6671 (33), die gemäß einem Verfahren nach einem der vorhergehenden Ansprüche geklebt ist.

## Claims

1. A method for assembling a thermal protection (31), comprising a thermal mattress (33) covered with a ply (35a) made of a structural material, on an inner fixed structure (29) of the turbojet engine nacelle, comprising the following successive steps:
- coating with an adhesive (43), provided to ensure a good mechanical hold up to a temperature of 1000°C, said ply (35a) and/or an inner skin (39) of the inner fixed structure ;
- applying said ply (35a) on said inner skin (39), and
- let the adhesive set spontaneously after at least few minutes.

2. The method according to claim 1, wherein said ply (35a) is a glass ply.

3. The method according to claim 2, wherein said thermal mattress is stuck on said glass ply.

4. The method according to any of claims 1 to 3, wherein said thermal mattress (33) is covered with a fluid-proof material and firewall, such as a sheet (35b) in stainless steel.

5. The method according to any one of claims 1 to 3, wherein said thermal mattress is formed in a hydrophobic material.

6. The method according to any one of the preceding claims, wherein said thermal mattress (33) is a thermal mattress of the Pyrogel 6671-type.

7. The method according to any one of the preceding claims, wherein the adhesive (43) is applied in spots.

8. The method according to any one of the preceding claims, wherein the adhesive (43) is an adhesive of the type APRONOR high T°C 1000.

9. An inner fixed structure (29) of turbojet engine nacelle including, on its inner face on the core compartment side, a mattress of the Pyrogel 6671-type (33) stuck in compliance with the method according to any one of the preceding claims.
